# EUROPEAN PATENT SPECIFICATION

(11) **EP 4 434 679 B1**
(45) Date of publication and mention of the grant of the patent: **04.03.2026**
(21) Application number: 22895361.8
(22) Date of filing: 25.10.2022
(51) Int. Cl.: B25B 23/14, G05B 19/418

(54) **ELECTRIC TOOL AND ELECTRIC TOOL SYSTEM**
ELEKTROWERKZEUG UND ELEKTROWERKZEUGSYSTEM
OUTIL ÉLECTRIQUE ET SYSTÈME D'OUTIL ÉLECTRIQUE

(30) Priority: 19.11.2021 JP 2021188796
(43) Date of publication of application: 25.09.2024
(73) Proprietor: Panasonic Holdings Corporation, Osaka 571-8501 (JP)
(72) Inventor: MUTO, Motoharu, Kadoma-shi, Osaka 571-0057 (JP); SAWANO, Fumiaki, Kadoma-shi, Osaka 571-0057 (JP); MURAKAMI, Hiroaki, Kadoma-shi, Osaka 571-0057 (JP); NAKAMOTO, Masanori, Kadoma-shi, Osaka 571-0057 (JP)
(74) Representative: Müller-Boré & Partner Patentanwälte PartG mbB
(86) International application number: PCT/JP2022/039730
(87) International publication number: WO 2023/090077

(56) References cited:
- EP-A1- 3 871 839
- WO-A1-2021/016437
- WO-A1-2021/167668
- WO-A1-2021/229972
- JP-A- 2008 213 068
- JP-A- 2014 232 116
- JP-A- 2014 232 116
- JP-A- 2017 087 359
- JP-A- H08 267 368
- US-A1- 2021 197 357
- US-B1- 10 571 367

## Description

### Technical Field

The present disclosure generally relates to an electric tool and an electric tool system. More particularly, the present disclosure relates to an electric tool to be used by a worker for performing a fastening operation and also relates to an electric tool system including such an electric tool.

### Background Art

Patent Literature 1 discloses an electric tool control system (electric tool system) including an electric tool and a center manager. The center manager transmits preset screw fastening information to the electric tool over a network. The electric tool controls the rotation of its motor in accordance with the screw fastening information received. The center manager also receives, from the electric tool over the network, the history of screw fastening operations that have been performed so far, thereby controlling, by reference to the history, a line velocity at which the target of the screw fastening operations moves on the screw fastening line.

In the electric tool control system of Patent Literature 1, the history of the screw fastening operations is transmitted wirelessly from the electric tool to the center manager during an intermission between the operations using the electric tool. That is why as the amount of information to transmit increases, it takes a longer and longer time to establish the communication. If it takes a long time for the electric tool to transmit the history information, then the screw fastening operations cannot be performed during the transmission. This means that the screw fastening operations need to be suspended for an increasing amount of time, thus causing a decline in the user-friendliness of the electric tool.

### Citation List

### Patent Literature

Patent Literature 1: JP 2000-334670 A

WO 2021/167668 A1 discloses a power tool according to the preamble of claim 1.

EP 3871839 A1, JP 2014232116 A, WO 2021/016437 A1, WO 2021/229972 A1, US 10571367 B1, US 2021/197357 A1 disclose further power tools according to the state of the art.

### Summary of Invention

An object of the present disclosure is to provide an electric tool and electric tool system with improved user-friendliness.

An electric tool according to an aspect of the present disclosure includes a fastening unit, a control unit, a sensor unit, a communications unit, a storage unit, and a portable tool body. The fastening unit performs a fastening operation on a designated member using driving force supplied from a power source. The control unit controls operations of the fastening unit. The sensor unit measures at least fastening torque applied by the fastening unit. The communications unit transmits operations data about a result of measurement made by the sensor unit. The portable tool body houses the fastening unit, the control unit, the sensor unit, the communications unit, and the storage unit. The communications unit includes: a wireless communications unit that transmits the operations data by a wireless communication method; and a wired communications unit that transmits the operations data by a wired communication method. The communications unit transmits the operations data in a communication mode including at least a wireless communication mode and a wired communication mode. In the wireless communication mode, the wireless communications unit transmits, by the wireless communication method, at least a part of the operations data about the result of measurement provided by the sensor unit, when the fastening operation has been done for either one round or multiple rounds. In the wired communication mode, while the communications unit is operating in the wired communication mode, the wired communications unit transmits, by the wired communication method, the operations data stored in the storage unit.

An electric tool system according to another aspect of the present disclosure includes the electric tool described above and a receiver. The receiver receives the operations data that has been transmitted from the wireless communications unit.

### Brief Description of Drawings

FIG. 1 is a schematic block diagram of an electric tool system including an electric tool according to an exemplary embodiment;
FIG. 2 illustrates a schematic system configuration for the electric tool system;
FIG. 3 is a schematic side view of the electric tool;
FIG. 4 is a partially cutaway side view of the electric tool;
FIG. 5 is a perspective view illustrating a main part of the electric tool;
FIG. 6 is a flowchart showing the procedure of operation of the electric tool in a wireless communication mode; and
FIG. 7 is a flowchart showing the procedure of operation of the electric tool in a wired communication mode.

### Description of Embodiments

### (Embodiment)

The drawings to be referred to in the following description of embodiments are all schematic representations. Thus, the ratio of the dimensions (including thicknesses) of respective constituent elements illustrated on the drawings does not always reflect their actual dimensional ratio.

An electric tool and electric tool system according to an exemplary embodiment of the present disclosure will now be described in detail with reference to the accompanying drawings. Note that the exemplary embodiment and its variations to be described below is only an exemplary one of various embodiments of the present disclosure and its variations and should not be construed as limiting. Rather, the exemplary embodiment and its variations may be readily modified in various manners depending on a design choice or any other factor without departing from a true spirit and scope of the present disclosure. Note that the exemplary embodiments (including their variations) to be described below may be adopted in combination as appropriate.

### (1) Overview

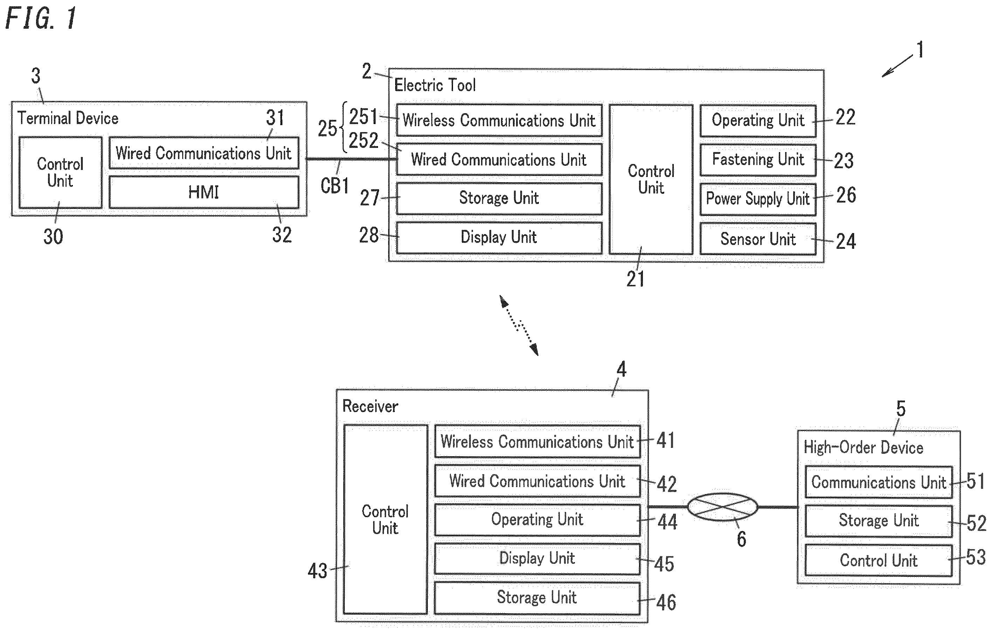

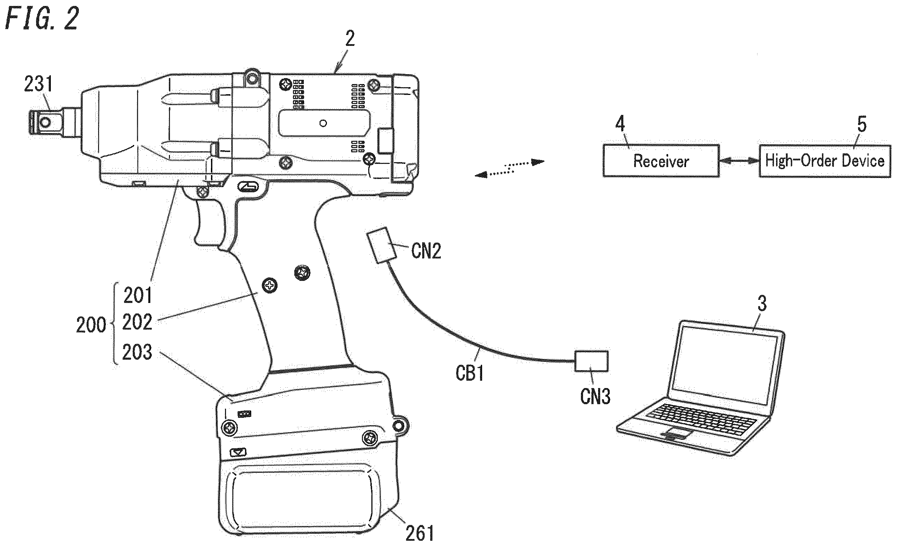

First, an overview of an electric tool 2 according to this embodiment and an electric tool system 1 including the electric tool 2 will be described with reference to FIGS. 1 and 2.

The electric tool 2 includes a fastening unit 23, a control unit 21, a sensor unit 24, a communications unit 25, a storage unit 27, and a portable tool body 200.

The fastening unit 23 performs a fastening operation on a designated member using driving force supplied from a power source.

The control unit 21 controls operations of the fastening unit 23.

The sensor unit 24 measures at least fastening torque applied by the fastening unit 23.

The communications unit 25 transmits operations data about a result of measurement made by the sensor unit 24.

The portable tool body 200 houses the fastening unit 23, the control unit 21, the sensor unit 24, the communications unit 25, and the storage unit 27.

The communications unit 25 includes: a wireless communications unit 251 that transmits the operations data by a wireless communication method; and a wired communications unit 252 that transmits the operations data by a wired communication method.

The communications unit 25 transmits the operations data in a communication mode including at least a wireless communication mode and a wired communication mode. In the wireless communication mode, the wireless communications unit 251 transmits, by the wireless communication method, the operations data about the result of measurement provided by the sensor unit 24, when the fastening operation has been done for either one round or multiple rounds. In the wired communication mode, the wired communications unit 252 transmits, by the wired communication method, the operations data stored in the storage unit 27 while the electric tool 2 is operating in the wired communication mode.

In this embodiment, the electric tool 2 is used to perform a fastening operation on a designated member. The electric tool 2 is a portable tool to be carried and used by the user with him or her. As used herein, the "fastening operation" to be performed using the electric tool 2 refers, for example, to the operation of fastening a nut as an exemplary first member onto a bolt as an exemplary second member. However, the first member and the second member do not have to be the nut and the bolt, respectively, but may be changed as appropriate. Also, the fastening operation may also be the operation of fastening a plurality of first members onto a single second member. The plurality of first members may be either members of the same type or members of multiple different types. Also, as used herein, the "operations data" about the result of measurement made by the sensor unit 24 may be a measured value (such as a maximum value or an average value) of the fastening torque measured by the sensor unit 24 or time-series data (waveform data) representing a variation in fastening torque with time during the fastening operation, whichever is appropriate. Alternatively, the operations data may also be data such as the decision made by determining, based on, for example, the measured value of the fastening torque measured by the sensor unit 24, whether the operation has been performed successfully or failed. Note that the sensor unit 24 may measure not only the fastening torque but also the number of revolutions of the motor as the power source or the value of a current flowing through the motor. That is to say, the physical quantity to be measured by the sensor unit 24 may be changed as appropriate.

In this electric tool 2, the communication mode of the communications unit 25 includes at least a wireless communication mode and a wired communication mode. In the wired communication mode, while the communications unit 25 is operating in the wired communication mode, the wired communications unit 252 transmits, by the wired communication method, the operations data stored in the storage unit 27. This reduces the chances of the fastening operation being interfered by transmission of the operation data, thus achieving the advantage of improving the user-friendliness compared to transmitting the operation data by the wireless communication method during an intermission between fastening operations. In addition, in an environment where wireless communication is not always established successfully between the electric tool 2 and its communications partner, setting the communication mode of the communications unit 25 at the wired communication mode allows the operations data to be transmitted in the wired communication mode, thus achieving the advantage of improving the user-friendliness. Besides, in general, the wired communication method allows data to be transmitted at a higher transfer rate than the wireless communication method does, thus enabling the communications unit 25 operating in the wired communication mode to transmit, in a shorter time, the operations data stored in the storage unit 27 and thereby improving the user-friendliness as well. Note that in the wireless communication mode, the electric tool 2 operates in accordance with the operation instruction information about the fastening operation. On the other hand, in the wired communication mode, once the electric tool 2 has received the operating instruction by the wired communication method, the electric tool 2 will operate by itself. Thus, the wired communication mode is also called a "stand alone mode."

Note that if the communication mode is set at both the wireless communication mode and the wired communication mode, then the communications unit 25 may have both wireless communication established by the wireless communications unit 251 and wired communication established by the wired communications unit 252. The wireless communication may always be established by the wireless communications unit 251. When the wired communications unit 252 and the terminal device 3 are connected via a cable, wired communication may also be established by the wired communications unit 252.

In the following description of embodiments, a situation where the communication mode of the communications unit 25 is set at either the wireless communication mode or the wired communication mode will be described.

Also, as shown in FIGS. 1 and 2, the electric tool system 1 includes the electric tool 2 and the receiver 4. The receiver 4 receives the operations data that has been transmitted from the electric tool 2.

Note that although only one electric tool 2 is illustrated in FIGS. 1 and 2, multiple electric tools 2 may be provided. That is to say, the electric tool system 1 may include a plurality of electric tools 2 and the receiver 4 may communicate with each of the plurality of electric tools 2.

### (2) Details

Next, an electric tool 2 according to this embodiment and an electric tool system 1 including the electric tool 2 will now be described in detail with reference to the accompanying drawings.

### (2.1) Configuration

A configuration for the electric tool system 1 will be described with reference to FIGS. 1-3.

The electric tool system 1 according to this embodiment may be used, for example, on an assembly line for performing assembling operations of products at a factory. Note that the electric tool system 1 is not necessarily used on the assembly line at a factory but may also be used for any other purposes. For example, the electric tool system 1 may also be used to build a building at a construction site of building operations.

As shown in FIG. 1, the electric tool system 1 includes the electric tool 2 and the receiver 4. Optionally, the electric tool system 1 may further include a high-order device 5 which may communicate with the receiver 4 over a network 6. In this case, the high-order device 5 is not an essential constituent element for the electric tool system 1 but may be omitted as appropriate. In addition, a terminal device 3 may also be connected to the electric tool 2 via a communications cable CB1 to establish wired communication with the electric tool 2.

Next, the respective devices that form this electric tool system 1 will be described in detail with reference to the accompanying drawings.

### (2.1.1) Electric tool

As shown in FIG. 1, the electric tool 2 includes the control unit 21, an operating unit 22, the fastening unit 23, the sensor unit 24, the communications unit 25, a power supply unit 26, the storage unit 27, and a display unit 28.

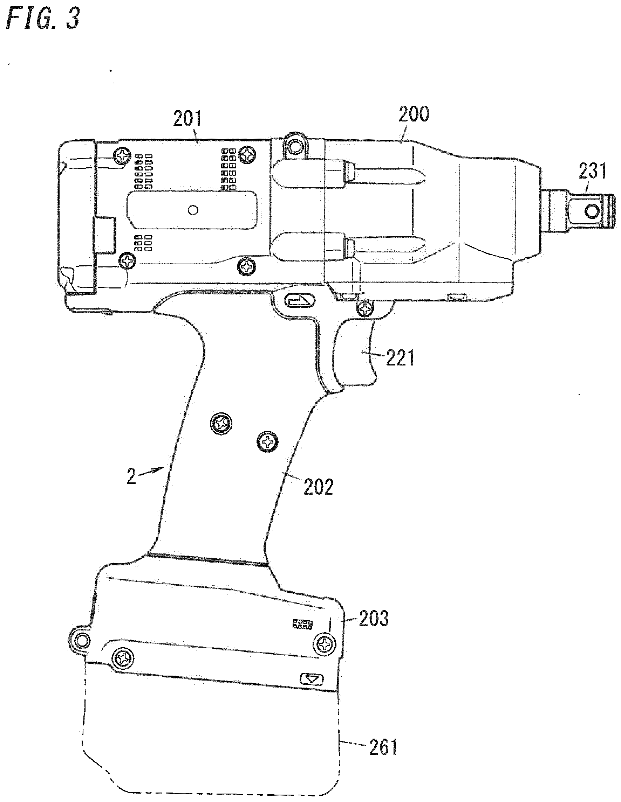

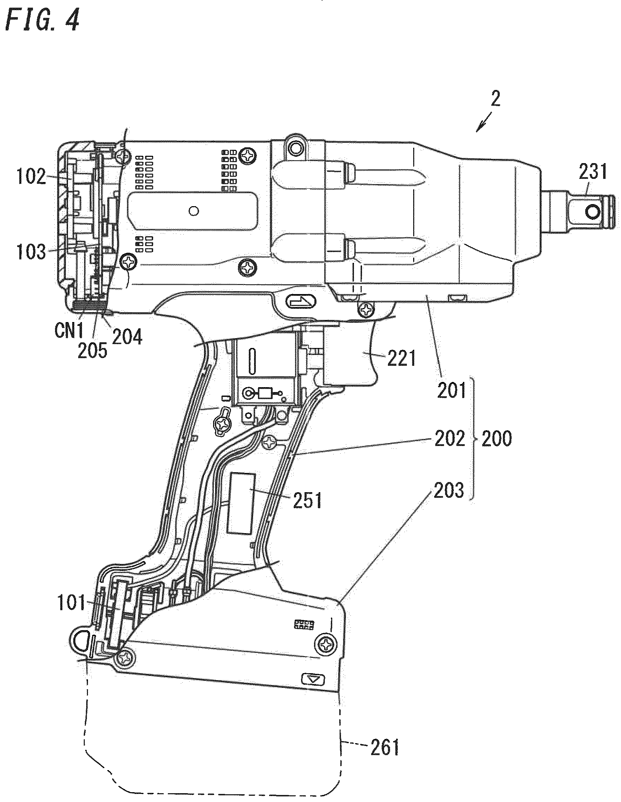

As shown in FIGS. 2-4, the electric tool 2 further includes a portable tool body 200 in which respective members are housed or held. The tool body 200 includes a cylindrical barrel 201 and a grip 202 protruding radially from a peripheral surface of the barrel 201. An output shaft 231 protrudes from one axial end of the barrel 201. The output shaft 231 is provided with a socket, to which a tip tool (such as a torque wrench bit) is attached removably and selectively according to the type of the first member as the work target. Thus, any desired tip tool may be attached to the output shaft 231 via the socket. At one end (i.e., the lower end in FIG. 3) of the grip 202, provided is a battery cradle 203. To the battery cradle 203, a battery pack 261, housing the power supply unit 26 in a resin case, is attached removably.

The fastening unit 23 includes the output shaft 231, a motor for turning the 231, and a driver circuit for driving the motor. Note that the electric tool 2 according to this embodiment is an impact tool and the fastening unit 23 has an impact mechanism for generating impacting force to the output shaft 231. The impact mechanism is configured to, when the output torque is equal to or less than a predetermined level, reduce the rotational speed of the output shaft of the motor, transmit reduced rotational power to the output shaft 231, and thereby rotate the first member. The impact mechanism is also configured to, when the output torque exceeds the predetermined level, apply impacting force to the output shaft 231 to rotate the first member. The motor and the impact mechanism are housed inside the barrel 201.

The control unit 21 controls the respective operations of the fastening unit 23, the sensor unit 24, the communications unit 25, and other units. The control unit 21 is implemented as a computer system including one or more processors and a memory. The computer system performs the functions of the control unit 21 by making the one or more processors execute a program stored in the memory. In this embodiment, the program is stored in advance in the memory of the control unit 21. Alternatively, the program may also be downloaded via a telecommunications line such as the Internet or distributed after having been stored in a non-transitory storage medium such as a memory card. The control unit 21 may be implemented as, for example, a field-programmable gate array (FPGA) or an application specific integrated circuit (ASIC). A microcontroller (such as a circuit board) performing the functions of the control unit 21 may be housed inside the grip 202, for example.

The operating unit 22 includes a trigger switch 221 provided for the grip 202. When the trigger switch 221 is pulled by the user, for example, an operating signal, of which the magnitude is proportional to the manipulative variable of the trigger switch 221 (i.e., the depth to which the trigger switch 221 has been pulled), is supplied to the control unit 21. In response to the operating signal supplied from the operating unit 22, the control unit 21 adjusts the rotational speed of the motor included in the fastening unit 23 by controlling the fastening unit 23 such that the output shaft 231 rotates at a rotational speed corresponding to the operating signal supplied from the operating unit 22.

The sensor unit 24 measures the fastening torque applied by the fastening unit 23. The sensor unit 24 may include, for example, a magnetostrictive torque sensor mounted on the output shaft 231. The magnetostrictive torque sensor makes a coil, which is disposed in a non-rotating portion, detect a variation in magnetic permeability responsive to the strain caused upon the application of torque to the output shaft 231 and outputs a voltage signal proportional to the strain. In this manner, the sensor unit 24 measures the torque applied to the output shaft 231. That is to say, the sensor unit 24 measures the torque (fastening torque) applied by the electric tool 2 to the first member as the work target. The sensor unit 24 outputs the torque (fastening torque) thus measured to the control unit 21. Note that the sensor unit 24 may measure either the torque applied to the output shaft of the motor or the fastening torque applied to the output shaft 231 based on the torque applied to the output shaft of the motor and a reduction ratio of a speed reducer mechanism, for example. Note that the sensor unit 24 does not have to include the magnetostrictive torque sensor but the configuration of the sensor unit 24 may be changed as appropriate. For example, the sensor unit 24 may measure the fastening torque of fastening the first member onto the second member by detecting a current flowing through the motor included in the fastening unit 23.

The control unit 21 controls the fastening unit 23 such that the fastening torque applied to the first member comes to have a torque setting to be set in accordance with the operation instruction information provided by either the receiver 4 or the terminal device 3. When finding that the fastening torque measured by the sensor unit 24 has reached the torque setting, for example, the control unit 21 stops running the motor of the fastening unit 23. Note that the torque setting is variable and may be changed by the control unit 21 in accordance with the operation instruction information transmitted from either the receiver 4 or the terminal device 3 to the electric tool 2. As used herein, the "operation instruction information" preferably includes information about the specifics of the fastening operation to be performed for either one round or multiple rounds using the electric tool 2. The operation instruction information may include, for example, information representing the specifics of the fastening operation to be performed for either one round or multiple rounds. If the operation to be performed using the electric tool 2 is a fastening operation, then the operation instruction information preferably includes information about the fastening torque. The information about the fastening torque may be either a preset torque value (torque value) or the number of times of impact applied if the electric tool 2 is an impact tool. If the fastening operation to be performed using the electric tool 2 includes so-called "batch operations" that require a unitary operation having predetermined specific details to be performed continuously multiple times, then the operation instruction information preferably includes batch operation information about the specific details of the unitary operation (e.g., the setting of the fastening torque) and number of times information about the number of times the unitary operation is performed continuously. Note that the phrase "to perform the unitary operation continuously a number of times" does not always mean that the unitary operation is performed repeatedly without a break but may also mean that the unitary operation is performed intermittently at intervals unless another type of operation intervenes between the unitary operations.

The communications unit 25 includes the wireless communications unit 251 and the wired communications unit 252 as described above.

The wireless communications unit 251 may be a communications module for establishing short-range wireless communication compliant with the ZigBee(R) standard, for example. The wireless communications unit 251 may communicate wirelessly with the receiver 4 in accordance with this type of communications protocol. In the wireless communication mode, the wireless communications unit 251 transmits the operations data, which is temporarily stored in a memory such as a random-access memory (RAM) included in the control unit 21, to the receiver 4 by a wireless communication method. On the other hand, if the wireless communications unit 251 reads out the operation data from the storage unit 27 such as an electrically erasable programmable read-only memory (EEPROM) and wirelessly transmits the operations data thus read to the receiver 4, then it takes some time to access the storage unit 27, and therefore, takes some time to transmit the operations data. While the communications unit 25 is transmitting the operations data, the control unit 21 makes the fastening unit 23 suspend the fastening operation. Thus, if it takes a long time to transmit the operations data, then the intermission before the next round of the fastening operation is ready to be started becomes too long to avoid a significantly prolonged operation cycle in a situation where the fastening operation is performed repeatedly. In contrast, according to this embodiment, the wireless communications unit 251 transmits the operations data, which is temporarily stored in a memory such as a RAM, to the receiver 4 by the wireless communication method, thus requiring no time to access the storage unit 27 such as an EEPROM and thereby shortening the time it takes to transmit the operations data. Consequently, this allows the intermission between the transmission of the operations data and the start of the fastening operation to be shortened, thus achieving the advantage of shortening the operation cycle in a situation where the fastening operation needs to be performed repeatedly.

Alternatively, the wireless communication established between the wireless communications unit 251 and the receiver 4 may also be wireless communication that uses radio waves as a transmission medium and is compliant with a communications protocol such as the Specified Low Power Radio (radio station that requires no licenses) on the 920 MHz band, the Wi-Fi (R) protocol, or the Bluetooth(R) protocol. For example, the wireless communications unit 251 is housed inside the grip 202 and an antenna of the wireless communications unit 251 is housed inside the barrel 201.

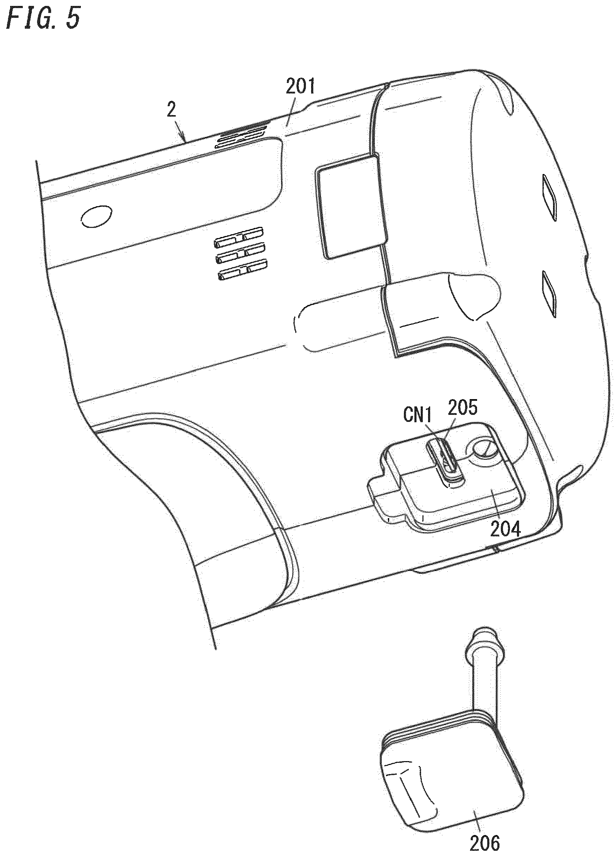

The wired communications unit 252 communicates with the terminal device 3, which is connected to the electric tool 2 via the communications cable CB1, by a wired communication method compliant with the USB standard, for example. In the wired communication mode, the wired communications unit 252 reads out the operations data stored in the storage unit 27 from the storage unit 27 and transmits the operations data to the terminal device 3. In this embodiment, a recess 204 is provided on the peripheral surface of a rear part of the barrel 201 of the electric tool 2 as shown in FIG. 5. The bottom of the recess 204 has a hole 205, through which a female USB connector CN1 is exposed. The communications cable CB1 has male USB connectors CN2, CN3 at both ends thereof. Connecting the USB connector CN2 at a first end of the communications cable CB1 to the USB connector CN1 of the electric tool 2 and connecting the USB connector CN3 at a second end of the communications cable CB1 to the female USB connector of the terminal device 3 allows the electric tool 2 to be connected to the terminal device 3 via the communications cable CB1. In this state, communication is established between the wired communications unit 252 of the electric tool 2 and a wired communications unit 31 of the terminal device 3 (refer to FIG. 1). Note that in a state where the USB connector CN2 or CN3 of the communications cable CB1 is disconnected from the USB connector CN1, a flexible cap member 206 made of a synthetic resin is fitted removably into the recess 204 of the barrel 201, thus reducing the chances of dust, water, or any other foreign particle entering the USB connector CN1, for example.

The power supply unit 26 includes a storage battery. The power supply unit 26 is housed inside the battery pack 261. The battery pack 261 is configured to house the power supply unit 26 inside a resin case. The storage battery of the power supply unit 26 may be charged by removing the battery pack 261 from the battery cradle 203 of the tool body 200 and connecting the battery pack 261 thus removed to a charger. The power supply unit 26 supplies power required to operate an electric circuit including the control unit 21 and the motor with the power stored in the storage battery.

Examples of the storage unit 27 include a read-only memory (ROM) and a nonvolatile memory. Examples of the nonvolatile memory include an EEPROM and a flash memory. The storage unit 27 stores a control program to be executed by the control unit 21. In addition, the storage unit 27 also stores the operation instruction information received from either the receiver 4 or the terminal device 3 and operations data about the specifics of the operation that has been done in accordance with the operation instruction information. The operations data may be, for example, information indicating that the operation has been done or information about the result of the operation that has been done. If the operation to be done is the operation of fastening the first member onto the second member, then information about the result of the operation that has been done preferably includes, for example, a value of the fastening torque measured by the sensor unit 24 and the number of the first members on which the fastening operation has been done (hereinafter referred to as "the number of finished members"). In addition, information about the result of the operation that has been done may also include decision information indicating whether the operation has been done successfully or failed in accordance with the operation instruction information. Furthermore, the storage unit 27 also stores identification information assigned to the respective electric tools 2 and information (tool model information) about the models of the respective electric tools 2 (e.g., information about the manufacturer, the product number assigned by the manufacturer, and other attributes). In this case, the identification information preferably includes IP addresses assigned to the respective electric tools 2, for example.

The display unit 28 includes, for example, two-digit seven-segment light-emitting diodes (LEDs) which are provided to be exposed on the surface of the tool body 200 (e.g., on the upper surface of the battery cradle 203). The display unit 28 also includes, for example, a blue LED and a red LED, which are provided to be exposed on the surface of the tool body 200 (e.g., on the rear end surface of the barrel 201).

Note that inside the battery cradle 203, housed is a circuit board 101 on which circuit components including the wired communications unit 252 are mounted. In addition, inside the barrel 201, also housed are a circuit board 102 on which circuit components such as light-emitting diodes included in the display unit 28 are mounted and a circuit board 103 on which circuit components such as the USB connector CN1 are mounted. As can be seen, in this embodiment, a plurality of circuit boards including the circuit boards 101-103 are housed inside the tool body 200. However, the circuit components of the electric tool 2 do not have to be separately mounted on the plurality of circuit boards but may also be mounted collectively on a single circuit board.

### (2.1.2) Receiver

As shown in FIG. 1, the receiver 4 includes a wireless communications unit 41, a wired communications unit 42, a control unit 43, an operating unit 44, a display unit 45, and a storage unit 46.

The control unit 43 controls the respective operations of the wireless communications unit 41, the wired communications unit 42, the display unit 45, and other units. The control unit 43 is implemented as a computer system including one or more processors and a memory. The computer system performs the functions of the control unit 43 by making the one or more processors execute a program stored in the memory. In this embodiment, the program is stored in advance in the memory of the control unit 43. Alternatively, the program may also be downloaded via a telecommunications line such as the Internet or distributed after having been stored in a non-transitory storage medium such as a memory card. The control unit 43 may be implemented as, for example, an FPGA or an ASIC.

The wired communications unit 42 is a communications module for establishing short-range wireless communication compliant with the same communications protocol (such as the ZigBee(R) protocol) as the wireless communications unit 251 of the electric tool 2, for example. The wireless communications unit 41 communicates wirelessly with the wireless communications unit 251 of the electric tool 2.

The wired communications unit 42 is a communications module for establishing wired communication via a communications cable. The wired communications unit 42 communicates with a communications unit 51 of the high-order device 5 via the network 6 such as the Ethernet (R). The network 6 may also be a local area network (LAN) installed in a facility such as a factory where the electric tool 2 is used or a wide area network (WAN) such as the Internet.

The operating unit 44 includes, for example, an operating switch that accepts the user's operating command.

The display unit 45 includes, for example, a plurality of light-emitting diodes (LEDs) and indicates the operating state of the receiver 4 by turning ON or OFF or flashing the LEDs. Optionally, the display unit 45 may include a display device such as a liquid crystal display.

Examples of the storage unit 46 include a ROM, a RAM, and a nonvolatile memory (such as an EEPROM or a flash memory). The storage unit 46 stores the operation instruction information about the specifics of the fastening operation to be performed using the electric tool 2, the operations data received from the electric tool 2, and other pieces of information in association with the identification information of the electric tool 2. This allows the storage unit 46 to store, with respect to each of a plurality of electric tools 2, the operation instruction information to be transmitted to the electric tool 2 and the operations data received from the electric tool 2. In addition, the storage unit 46 also stores other pieces of information including the identification information assigned to each receiver 4 and information about the model of the receiver 4 (e.g., information about the manufacturer, the product number assigned by the manufacturer, and other attributes). In this case, the identification information preferably includes an IP address assigned to the receiver 4, for example.

### (2.1.3) High-order device

The high-order device 5 may be a server, for example. The high-order device 5 includes the communications unit 51, a storage unit 52, and a control unit 53.

The communications unit 51 is a communications module for establishing wired communication via a communications cable. The communications unit 51 communicates with the wired communications unit 42 of the receiver 4 via the network 6 such as the Ethernet (R).

Examples of the storage unit 52 include a ROM, a RAM, and a nonvolatile memory (such as an EEPROM or a flash memory). The storage unit 52 stores, with respect to each of the plurality of electric tools 2, the operation instruction information for the specifics of the fastening operation to be done using the electric tool 2, the history of the operations data about the operation that has been done using the electric tool 2, and other pieces of information in association with the identification information of the electric tool 2.

The control unit 53 controls the operation of the communications unit 51 and other units. The control unit 53 is implemented as a computer system including one or more processors and a memory. The computer system performs the functions of the control unit 53 by making the one or more processors execute a program stored in the memory. In this embodiment, the program is stored in advance in the memory of the control unit 53. Alternatively, the program may also be downloaded via a telecommunications line such as the Internet or distributed after having been stored in a non-transitory storage medium such as a memory card. The control unit 53 may be implemented as, for example, an FPGA or an ASIC.

The control unit 53 makes the communications unit 51 transmit operation instruction information about the specifics of the fastening operation to be done by the electric tool 2 to the receiver 4.

In addition, the control unit 53 also makes the storage unit 52 store the history of the operations data, received by the communications unit 51 from the receiver 4, about the operation that has been done by using the electric tool 2.

### (2.1.4) Terminal device

The terminal device 3 is a computer terminal in which a data loading application (program) for use to set the communication mode of the electric tool 2 and receive the operations data from the electric tool 2 by a wired communication method has been installed. The terminal device 3 may be a laptop computer, a tablet computer, or a mobile telecommunications device such as a smartphone, whichever is appropriate.

The terminal device 3 includes a control unit 30, a wired communications unit 31, and a human-machine interface (HMI) 32.

The wired communications unit 31 is connected to the electric tool 2 via the communications cable CB1. The wired communications unit 31 communicates with the wired communications unit 252 of the electric tool 2 by a wired communication method compliant with the USB standard, for example, via the communications cable CB1.

The HMI 32 includes an input unit that accepts the information entered by an administrator who uses the terminal device 3 and an output unit that outputs information to the administrator who uses the terminal device 3. Examples of the input unit that accepts the information entered by the administrator include a keyboard, a mouse, a switch, and a microphone for picking up audio information such as voices. Examples of the output unit that outputs information to the administrator include a display device such as a liquid crystal display, a lamp such as an LED lamp, and a loudspeaker for outputting audio information.

The control unit 30 controls the respective operations of the wired communications unit 31, the HMI 32, and other units. The control unit 30 is implemented as a computer system including one or more processors and a memory. The computer system performs the functions of the control unit 30 by making the one or more processors execute a program stored in the memory. In this embodiment, the program is stored in advance in the memory of the control unit 30. Alternatively, the program may also be downloaded via a telecommunications line such as the Internet or distributed after having been stored in a non-transitory storage medium such as a memory card. The control unit 30 may be implemented as, for example, an FPGA or an ASIC.

In the following description, the administrator who uses the terminal device 3 and the receiver 4 is supposed to be a different person from the user who performs the fastening operation using the electric tool 2. However, this is only an example and should not be construed as limiting. Alternatively, the administrator who uses the terminal device 3 and the receiver 4 and the user who performs the fastening operation using the electric tool 2 may be the same person.

### (2.2) Description of operation

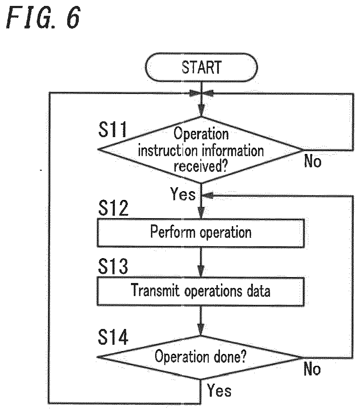

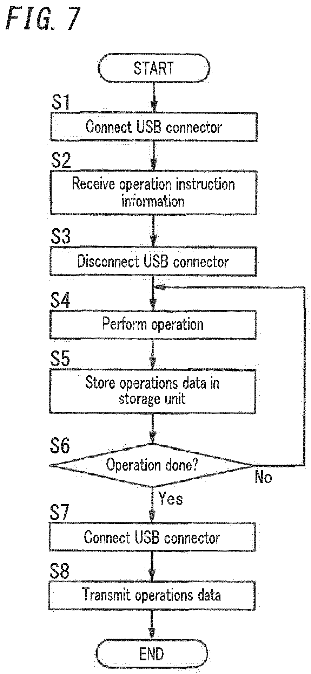

Next, it will be described with reference to FIGS. 6 and 7 and other drawings how the electric tool 2 included in the electric tool system 1 operates. As described above, the communication mode in which the electric tool 2 transmits the operations data includes the wireless communication mode and the wired communication mode. Thus, the operation of the electric tool 2 will be described with respect to these two communication modes.

The communication mode of the electric tool 2 may be set by using the terminal device 3, for example. With the electric tool 2 connected to the terminal device 3 via the communications cable CB1, the administrator has the data loading application, installed in the terminal device 3, executed to set, on the data loading application, the communication mode of the electric tool 2 to be either the wireless communication mode or the wired communication mode. Once the administrator has selected the communication mode using the data loading application, the control unit 30 makes the wired communications unit 31 transmit mode setting information for use to set the communication mode to the electric tool 2. When the wired communications unit 252 of the electric tool 2 receives the mode setting information, the control unit 21 sets, in accordance with the mode setting information, the communication mode to be either the wireless communication mode or the wired communication mode. In other words, the control unit 21 sets the communication mode to be either the wireless communication mode or the wired communication mode in accordance with the mode setting information that the wired communications unit 252 has received from the terminal device 3 connected to the wired communications unit 252 via the communications cable CB1. This enables setting the communication mode of the electric tool 2 to be either the wireless communication mode or the wired communication mode using the terminal device 3. When the administrator closes the data loading application to disconnect the communications cable CB1 from the electric tool 2, the electric tool 2 starts operating in the communication mode that has been set. Note that the data loading application executed by the terminal device 3 also allows the administrator to select the type of the operations data to be stored by the electric tool 2 on the storage unit 27. In addition, the data loading application to be executed by the terminal device 3 further allows the administrator to select the type of the operations data to be extracted from the electric tool 2. For that purpose, data type information, specifying the type of the operations data to acquire, is also transmitted from the terminal device 3 to the electric tool 2.

### (2.2.1) Operation in wireless communication mode

Next, it will be described with reference to FIG. 6 and other drawings how the electric tool 2 operates when the communication mode of the electric tool 2 is set to be the wireless communication mode. Note that the electric tool 2 is configured to transmit, in accordance with the data type information provided by the terminal device 3, decision information indicating whether the operation has been done successfully or failed and the time series data of the fastening torque as the operations data to the receiver 4. Alternatively, the electric tool 2 may transmit the measured value (such as a maximum value or an average value) of the fastening torque as operations data to the receiver 4 in accordance with the data type information. Note that the measured value of the fastening torque does not have to be transmitted as the operations data to the receiver 4. Rather, the content of the operations data may be changed as appropriate.

The operation instruction information is transmitted by the wireless communication method from the receiver 4 to the electric tool 2 that is operating in the wireless communication mode.

When the administrator who uses the receiver 4 creates, using the operating unit 44, the operation instruction information (such as information about the fastening torque and the number of the work targets) about either one round or multiple rounds of fastening operation(s) as information to be provided for the electric tool 2, the operation instruction information thus created is transmitted from the wireless communications unit 41 to the electric tool 2 as the target of setup. Optionally, the receiver 4 may be configured to be ready to communicate with the terminal device 3 and acquire, from the terminal device 3, the operation instruction information created by the terminal device 3 and transmit the operation instruction information to the electric tool 2 as the target of setup. Furthermore, the receiver 4 may also be configured to acquire, from the high-order device 5, the operation instruction information created by the high-order device 5 and transmit the operation instruction information to the electric tool 2 as the target of setup.

When the wireless communications unit 251 of the electric tool 2 receives the operation instruction information that has been transmitted from the receiver 4 (if the answer is YES in Step S11), the control unit 21 has the operation instruction information stored in the storage unit 27. In addition, the control unit 21 also indicates, using the seven-segment LEDs included in the display unit 28, that the operation instruction information has been received and the electric tool 2 is ready to start performing the fastening operation. Note that while the wireless communications unit 251 is receiving the operation instruction information from the receiver 4, the control unit 21 lights the light-emitting diodes included as a communications status indicator in the display unit 28 to indicate that the wireless communications unit 251 is now communicating with the receiver 4. When the communication between the wireless communications unit 251 and the receiver 4 is finished, the control unit 21 flashes the light-emitting diodes included as a communications status indicator in the display unit 28 to indicate that the communication with the receiver 4 has ended and the electric tool 2 is now ready to start performing the fastening operation using the fastening unit 23.

When the electric tool 2 is ready to start performing the fastening operation using the fastening unit 23, the user goes to the workplace while carrying the electric tool 2 with him or her. When the user pulls the trigger switch 221 with the tip tool, attached to the output shaft 231 of the electric tool 2 via the socket, set in place on the first member, the control unit 21 controls the fastening unit 23 in accordance with the operation instruction information to have the fastening operation of fastening the first member onto the second member performed (in Step S12). The operation instruction information includes information about the fastening torque. The control unit 21 controls the fastening unit 23 such that the measured value of the fastening torque measured by the sensor unit 24 agrees with the value of the fastening torque included in the operation instruction information. As can be seen, in the wireless communication mode, the wireless communications unit 251 receives the operation instruction information about the fastening operation and the control unit 21 controls the fastening unit 23 in accordance with the operation instruction information. This allows the receiver 4 to transmit the operation instruction information about the fastening operation to the electric tool 2 at a distant location, thus saving the trouble of receiving the operation instruction information from the terminal device 3 with the electric tool 2 connected to the terminal device 3 via the communications cable CB1 and thereby improving the user-friendliness of the electric tool 2.

When the fastening unit 23 has done one round of the fastening operation, the control unit 21 has various types of operations data temporarily stored in the memory of the control unit 21. Various types of operations data include information about the decision made based on the result of measurement by the sensor unit 24 to indicate whether the operation has been done successfully or failed, the measured value (such as an average value or a maximum value) of the fastening torque, and the time series data of the fastening torque from the beginning through the end of the one round of the fastening operation. In addition, the control unit 21 also makes the wireless communications unit 251 transmit the operations data, including the information about the decision that is temporarily stored in the memory, and the identification information of the electric tool 2 to the receiver 4 (in Step S13). In other words, when the one round of the fastening operation is done, the wireless communications unit 251 transmits at least a part of the operations data by the wireless communications method. This allows the electric tool 2 to transmit, every time one round of the fastening operation is done, the operations data of the fastening operation that has been performed using the electric tool 2, to the receiver 4. Thus, the administrator who uses the receiver 4 may determine, before starting performing the next round of the fastening operation, whether the fastening operation has been done successfully or failed, and if the fastening operation has failed, redo the fastening operation all over again. In addition, the administrator may also use data about the failure to improve the quality of the next round of the fastening operation. When the wireless communications unit 41 of the receiver 4 receives the operations data that has been transmitted from the electric tool 2, the operations data thus received (i.e., the decision information), the identification information of the electric tool 2 as the source, and the time of reception are stored in the storage unit 46 in association with each other. Note that in the transmission period in which the wireless communications unit 251 transmits the operations data, the control unit 21 makes the fastening unit 23 suspend the fastening operation. This reduces the chances of causing communication errors in the wireless communication between the wireless communications unit 251 and the receiver 4 due to electromagnetic noise involved with the fastening operation performed by the fastening unit 23.

In addition, the control unit 21 may also provide the user who uses the electric tool 2 with the decision information by lighting or flashing, in accordance with the decision information, the light-emitting diodes serving as an indicator lamp.

In this case, unless the fastening operation has been all done for either one round or multiple rounds in accordance with the operation instruction information received in Step S11 (if the answer is NO in Step S14), then the electric tool 2 returns to Step S12 to perform the fastening operation all over again.

On the other hand, if the fastening operation has been all done for either one round or multiple rounds in accordance with the operation instruction information received in Step S11 (if the answer is YES in Step S14), then the control unit 21 makes the fastening unit 23 suspend the fastening operation and returns to Step S11 to wait for the reception of new operation instruction information. That is to say, when the fastening operation has been all done in accordance with the operation instruction information, the control unit 21 makes the fastening unit 23 suspend the fastening operation, thus reducing the chances of the fastening operation being continued by the electric tool 2 with no operation instruction information set for the electric tool 2.

Note that although the time series data of the fastening torque is also temporarily stored as the operations data in the memory of the control unit 21, the time series data of the fastening torque has so large a data size that it takes a longer time to transmit the time series data of the fastening torque than transmitting the decision information. Therefore, transmitting the time series data of the fastening torque while the fastening operation is being performed using the electric tool 2 makes longer the period of time for which no fastening operation may be performed. Thus, the control unit 21 makes the wireless communications unit 251 wirelessly transmit the time series data of the fastening torque and the identification information of the electric tool 2 to the receiver 4 after the fastening operation has been all done for one round or multiple rounds in accordance with the operation instruction information. Consequently, wirelessly transmitting the time series data of the fastening torque and the identification information of the electric tool 2 may reduce the chances of the timing to resume the fastening operation being delayed.

Note that if the operation instruction information entered into the electric tool 2 is an operating instruction about batch operations that require a predetermined unitary operation to be repeated multiple times, then the wireless communications unit 251 may transmit at least a part of the operations data that is temporarily stored in the memory of the control unit 21 (e.g., the time series data of the fastening torque) to the receiver 4 at a point in time when the batch operations are finished. Likewise, even if the operation instruction information entered into the electric tool 2 is an operating instruction that requires the fastening operation to be performed for multiple rounds, then the wireless communications unit 251 may transmit at least a part of the operations data that is temporarily stored in the memory of the control unit 21 to the receiver 4 at a point in time when multiple rounds of the fastening operation as indicated by the operation instruction information are done. In this manner, in the wireless communication mode, when the fastening operation is done for multiple rounds, the wireless communications unit 251 may transmit at least a part of the operations data by the wireless communication method. Reducing the number of times to establish the wireless communication eliminates the need to suspend the fastening operation for the purpose of transmitting the operations data, thus enabling dealing with a fastening operation with a short takt time. In addition, reducing the number of times to establish wireless communication may also contribute to cutting down the power consumption. Furthermore, transmitting the operations data of the fastening operation that has been performed using the electric tool 2 to the receiver 4 at a timing when multiple rounds of the fastening operations have been done allows the user to determine, before starting performing the next round of the fastening operation, whether the fastening operation has been done successfully or failed and redo the fastening operation all over again if the fastening operation has failed.

Furthermore, in the wireless communication mode, the wireless communications unit 251 transmits the operations data that is temporarily stored in the memory of the control unit 21, thus enabling accessing the storage unit 27 in a shorter time than reading out the operations data stored in the storage unit 27 and transmitting the operations data. Consequently, this achieves the advantage of shortening the time it takes to establish wireless communication.

In the exemplary embodiment described above, every time the fastening operation has been done for one round, the control unit 21 makes the wireless communications unit 251 transmit decision information, indicating whether the operation has been done successfully or failed, to the receiver 4. Alternatively, the control unit 21 may also make the wireless communications unit 251 transmit the measured value of the fastening torque to the receiver 4. Still alternatively, every time one round of the fastening operation has been done, the control unit 21 may make the wireless communications unit 251 transmit the decision information, indicating whether the operation has been done successfully or failed, and the measured value of the fastening torque to the receiver 4.

### (2.2.2) Operation in wired communication mode

Next, it will be described with reference to FIG. 7 and other drawings how the electric tool 2 operates when the communication mode of the electric tool 2 is set to be the wired communication mode. Note that the electric tool 2 is configured to transmit, in accordance with the data type information provided by the terminal device 3, decision information indicating whether the operation has been done successfully or failed and the time series data of the fastening torque as the operations data to the terminal device 3. Alternatively, the electric tool 2 may transmit the measured value (such as a maximum value or an average value) of the fastening torque as operations data to the receiver 4 in accordance with the data type information. Note that the measured value of the fastening torque does not have to be transmitted as the operations data to the receiver 4. Rather, the content of the operations data may be changed as appropriate.

The administrator connects the USB connector CN2 of the communications cable CB1 to the USB connector CN1 of the electric tool 2 and also connects the USB connector CN3 of the communications cable CB1 to the terminal device 3, thereby connecting the electric tool 2 to the terminal device 3 via the communications cable CB1 (in Step S1). When the electric tool 2 and the terminal device 3 are connected via the communications cable CB1 to make the wired communications unit 252 ready to communicate with the wired communications unit 31, the control unit 21 lights the light-emitting diode included as a communication status indicator in the display unit 28, thereby indicating that communication has been established by the wired communication method.

The administrator executes the data loading application using the HMI 32 of the terminal device 3 to select the electric tool 2 as the target of setup. When the administrator creates, using the HMI 32 of the terminal device 3, the operation instruction information (such as information about the fastening torque and the number of the work targets) about either one round or multiple rounds of fastening operation as information to be provided for the electric tool 2, the wired communications unit 31 transmits the operation instruction information thus created to the electric tool 2. When the wired communications unit 252 of the electric tool 2 receives the operation instruction information that has been transmitted from the terminal device 3 (in Step S2), the control unit 21 has the operation instruction information stored in the storage unit 27. In addition, the control unit 21 also indicates, using the seven-segment LEDs included in the display unit 28, that the operation instruction information has been received and the electric tool 2 is ready to start performing the fastening operation. Alternatively, the terminal device 3 may also have the operation instruction information that the terminal device 3 has acquired from the high-order device 5 via the receiver 4 set for the electric tool 2.

When ready to start the fastening operation using the electric tool 2, the user who is going to perform the fastening operation using the electric tool 2 disconnects the USB connector CN2 from the USB connector CN1 of the electric tool 2 (in Step S3) and attaches the cap member 206 to the recess 204 of the barrel 201. Once the USB connector CN2 has been disconnected from the USB connector CN1, no communication is available between the wired communications unit 31 and the wired communications unit 252. Thus, the control unit 21 turns OFF the light-emitting diode included as a communication status indicator in the display unit 28 to indicate that the communication that has been established by the wired communications unit 31 has been cut off.

Thereafter, the user goes to the workplace while carrying the electric tool 2 with him or her. When the user pulls the trigger switch 221 with the tip tool, attached to the output shaft 231 of the electric tool 2 via the socket, set in place on the first member, the control unit 21 controls the fastening unit 23 in accordance with the operation instruction information to have the fastening operation of fastening the first member onto the second member performed (in Step S4). When the fastening unit 23 has done one round of the fastening operation, the control unit 21 has various types of operations data stored in the storage unit 27. Examples of the operations data include information about the decision made based on the result of measurement by the sensor unit 24 to indicate whether the operation has been done successfully or failed, the measured value of the fastening torque, and the time series data of the fastening torque from the beginning through the end of the one round of the fastening operation.

In this case, the control unit 21 determines whether the fastening operation has been all done in accordance with the operation instruction information (in Step S6). Unless the fastening operation has been all done (if the answer is NO in Step S6), the control unit 21 returns to Step S4 to perform the next round of the fastening operation.

On the other hand, if the fastening operation has been all done in accordance with the operation instruction information (if the answer is YES in Step S6), then the control unit 21 makes the fastening unit 23 suspend the fastening operation to prevent the fastening unit 23 from rotating even when the trigger switch 221 is pulled. In addition, the control unit 21 also indicates, using seven-segment LEDs, for example, that the fastening operation has been all done.

Thereafter, the user goes to the place where the terminal device 3 is put while carrying the electric tool 2 with him or her to connect the USB connector CN2 of the communications cable CB1 to the USB connector CN1 of the electric tool 2 and also connect the USB connector CN3 of the communications cable CB1 to the terminal device 3, thereby connecting the electric tool 2 and the terminal device 3 via the communications cable CB1 (in Step S7). When the electric tool 2 and the terminal device 3 are connected via the communications cable CB1 to make the wired communications unit 252 ready to communicate with the wired communications unit 31, the control unit 21 turns ON the light-emitting diode included as a communication status indicator in the display unit 28 to indicate that the communication has been re-established by the wired communication method.

Thereafter, as either the user or the administrator operates the HMI 32 of the terminal device 3 to execute the data loading application and thereby perform the operation of acquiring the operations data from the electric tool 2, the control unit 30 transmits transfer instruction information instructing that operations data be transferred from the wired communications unit 31 to the electric tool 2. When the wired communications unit 252 of the electric tool 2 receives the transfer instruction information from the terminal device 3, the control unit 21 reads out the operations data (including the decision information, the measured value of the fastening torque, and the time series data of the fastening torque) stored in the storage unit 27 and makes the wired communications unit 252 transmit the operations data to the terminal device 3 by wired communication method (in Step S8). In this case, when the operations data has been transferred from the electric tool 2 to the terminal device 3, the control unit 21 may erase the operations data stored in the storage unit 27. Also, the operations data to be transferred from the electric tool 2 to the terminal device 3 may be at least one, or all, selected from the group consisting of the decision information, the measured value of the fastening torque, and the time series data of the fastening torque.

When the operations data has been transferred from the electric tool 2 to the terminal device 3, the HMI 32 of the terminal device 3 indicates that the operations data has been transferred. On confirming that the operations data has been transferred fully, either the user or the administrator disconnects the connector CN2 from the electric tool 2 to end the fastening operation. Alternatively, the user or the administrator may operate the HMI 32 to set new operation instruction information for the electric tool 2. That is to say, either the user or the administrator may start performing new fastening operation using the electric tool 2.

As can be seen from the foregoing description, in the wired communication mode, while the communications unit 25 is operating in the wired communication mode, the operations data stored in the storage unit 27 is transmitted from the electric tool 2 to the terminal device 3 at the timing when the electric tool 2 and the terminal device 3 are connected via the communications cable CB1. This reduces, compared to wirelessly transmitting the operations data while the fastening operation is being performed using the electric tool 2, the chances of the fastening operation being interrupted by the wireless communication, thus achieving the advantage of improving the user-friendliness. Besides, the time series data of the fastening torque is transmitted by wired communication method that allows data to be transmitted at a higher transfer rate than wireless communication method does, thus enabling transmitting, in a shorter time, the time series data of the fastening torque and thereby improving the user-friendliness as well. In addition, in an environment where wireless communication is not always established successfully between the electric tool 2 and the receiver 4, setting the communication mode of the communications unit 25 to be the wired communication mode allows the operations data to be transmitted from the electric tool 2 to the terminal device 3 in the wired communication mode, thus achieving the advantage of improving the user-friendliness. Optionally, the terminal device 3 may also be configured to be ready to communicate with the receiver 4 to allow the terminal device 3 to transmit, to the receiver 4, the operations data stored in the memory of the terminal device 3.

### (3) Variations

Note that the embodiment described above is only an exemplary one of various embodiments of the present disclosure and should not be construed as limiting. Rather, the exemplary embodiment may be readily modified in various manners depending on a design choice or any other factor without departing from the scope of the present disclosure. The functions of the electric tool 2 included in the electric tool system 1 may also be implemented as a method for controlling a communication to be established by the electric tool 2, a computer program, or a non-transitory storage medium on which the program is stored. A method for controlling the communication mode of the electric tool 2 according to an aspect includes setting a communication mode in which the communications unit 25 transmits operations data to be either a wireless communication mode or a wired communication mode. In the wireless communication mode, when a fastening operation is done for one round or multiple rounds, the wireless communications unit 251 transmits, by wireless communication method, operations data about the result of measurement provided by the sensor unit 24. In the wired communication mode, while the communications unit 25 is operating in the wired communication mode, the wired communications unit 252 transmits, by wired communication method, operations data stored in the storage unit 27. A (computer) program according to another aspect is designed to cause a computer system to perform the method for controlling the communication mode of the electric tool 2 described above.

Next, variations of the exemplary embodiment will be enumerated one after another. Note that the variations to be described below may be adopted in combination as appropriate.

The electric tool system 1 (specifically, the electric tool 2, the receiver 4, and the high-order device 5) and terminal device 3 according to the present disclosure each includes a computer system. The computer system may include a processor and a memory as principal hardware components thereof. The functions of the electric tool system 1 (specifically, the electric tool 2, the receiver 4, and the high-order device 5) and the terminal device 3 according to the present disclosure may be performed by making the processor execute a program stored in the memory of the computer system. The program may be stored in advance in the memory of the computer system. Alternatively, the program may also be downloaded through a telecommunications line or be distributed after having been recorded in some non-transitory storage medium such as a memory card, an optical disc, or a hard disk drive, any of which is readable for the computer system. The processor of the computer system may be made up of a single or a plurality of electronic circuits including a semiconductor integrated circuit (IC) or a large-scale integrated circuit (LSI). As used herein, the "integrated circuit" such as an IC or an LSI is called by a different name depending on the degree of integration thereof. Examples of the integrated circuits such as an IC or an LSI include integrated circuits called a "system LSI," a "very-large-scale integrated circuit (VLSI)," and an "ultra-large-scale integrated circuit (ULSI)." Optionally, an FPGA to be programmed after an LSI has been fabricated or a reconfigurable logic device allowing the connections or circuit sections inside of an LSI to be reconfigured may also be adopted as the processor. Those electronic circuits may be either integrated together on a single chip or distributed on multiple chips, whichever is appropriate. Those multiple chips may be aggregated together in a single device or distributed in multiple devices without limitation. As used herein, the "computer system" includes a microcontroller including one or more processors and one or more memories. Thus, the microcontroller may also be implemented as a single or a plurality of electronic circuits including a semiconductor integrated circuit or a large-scale integrated circuit.

In the exemplary embodiment described above, the communication mode of the communications unit 25 may include not only the wireless communication mode and the wired communication mode but also a combination mode as well. The combination mode allows both the wireless communication by the wireless communications unit 251 and the wired communication by the wired communications unit 252 to be established. In that case, the control unit 21 sets, in accordance with mode setting information that the control unit 21 has received from the terminal device 3, the communication mode to be any one of the wireless communication mode, the wired communication mode, or the combination mode. Setting the communication mode of the communications unit 25 to be the combination mode allows the wireless communications unit 251 to establish wireless communication at any desired timing and also allows the wired communications unit 252 to establish wired communication in a state where the electric tool 2 is connected to the terminal device 3 via a communications cable. Thus, in the combination mode, the wireless communication by the wireless communications unit 251 and the wired communication by the wired communications unit 252 may be established simultaneously.

At least some functions of the receiver 4 and the high-order device 5 which are distributed in multiple devices in the exemplary embodiment described above may be aggregated together in a single housing. For example, some functions distributed in the receiver 4 and the high-order device 5 may be aggregated together in a single housing. Also, at least some functions of the terminal device 3 and at least some functions of the receiver 4 and/or the high-order device 5 may be aggregated together in a single housing.

In addition, the functions of the receiver 4, the high-order device 5, and the terminal device 3 may be aggregated together in a single housing or distributed in multiple housings, whichever is appropriate. Optionally, at least some functions of the receiver 4 (e.g., some functions of the control unit 43) may be implemented as a cloud computing system, for example.

Although only one electric tool 2 is shown in FIGS. 1 and 2, the number of electric tools 2 with which a single receiver 4 may communicate does not have to be one but may also be two or more and changed as appropriate. Likewise, although only one terminal device 3 is shown in FIGS. 1 and 2, the number of terminal devices 3 provided does not have to be one but may also be changed as appropriate. Furthermore, although only one receiver 4 is shown in FIGS. 1 and 2, a plurality of receivers 4 may be connected to a single high-order device 5 and the number of receivers 4 provided may be changed as appropriate.

In the embodiment described above, the electric tool 2 is supposed to be an impact tool for performing a fastening operation on a fastening member. However, the impact mechanism is not an essential constituent element for the electric tool 2 but the electric tool 2 with no impact mechanisms may also be used.

Furthermore, in the embodiment described above, the operation to be performed using the electric tool 2 is the fastening operation of fastening the first member onto the second member. However, this is only an example and should not be construed as limiting. Alternatively, the electric tool 2 may also be an electric tool for use to perform any type of operation (such as drilling a hole, machining, and cutting) other than the fastening operation. The specifics of the operations data may be changed as appropriate according to the type of the operation to be performed using the electric tool 2.

### (Recapitulation)

As can be seen from the foregoing description, an electric tool (2) according to a first aspect includes a fastening unit (23), a control unit (21), a sensor unit (24), a communications unit (25), a storage unit (27), and a portable tool body (200). The fastening unit (23) performs a fastening operation on a designated member using driving force supplied from a power source. The control unit (21) controls operations of the fastening unit (23). The sensor unit (24) measures at least fastening torque applied by the fastening unit (23). The communications unit (25) transmits operations data about a result of measurement made by the sensor unit (24). The portable tool body (200) houses the fastening unit (23), the control unit (21), the sensor unit (24), the communications unit (25), and the storage unit (27). The communications unit (25) includes: a wireless communications unit (251) that transmits the operations data by a wireless communication method; and a wired communications unit (252) that transmits the operations data by a wired communication method. The communications unit (25) transmits the operations data in a communication mode including at least a wireless communication mode and a wired communication mode. In the wireless communication mode, the wireless communications unit (251) transmits, by the wireless communication method, at least a part of the operations data about the result of measurement provided by the sensor unit (24), when the fastening operation has been done for either one round or multiple rounds. In the wired communication mode, the wired communications unit (252) transmits, by the wired communication method, the operations data stored in the storage unit (27) while the electric tool (2) is operating in the wired communication mode.

According to this aspect, the communication mode of the communications unit (25) includes at least a wireless communication mode and a wired communication mode. In the wired communication mode, the wired communications unit (252) transmits, by the wired communication method, the operations data stored in the storage unit (27) while the electric tool (2) is operating in the wired communication mode. This reduces the chances of the fastening operation being interfered by transmission of the operation data, thus achieving the advantage of improving the user-friendliness compared to transmitting the operation data by the wireless communication method during an intermission between fastening operations.

In an electric tool (2) according to a second aspect, which may be implemented in conjunction with the first aspect, in the wireless communication mode, the wireless communications unit (251) transmits at least a part of the operations data by the wireless communication method when the fastening operation has been done for one round.

According to this aspect, every time the fastening operation has been done for one round, the wireless communications unit (251) transmits the operations data by the wireless communication method. This allows the user to determine, based on the operations data before performing the next round of the fastening operation, whether the fastening operation has been done successfully or failed.

In an electric tool (2) according to a third aspect, which may be implemented in conjunction with the first aspect, in the wireless communication mode, the wireless communications unit (251) transmits at least a part of the operations data by the wireless communication method when the fastening operation has been done for multiple rounds.

According to this aspect, the operations data about multiple rounds of the fastening operations is transmitted by the wireless communication method, thus enabling reducing the number of times the wireless communication needs to be established.

In an electric tool (2) according to a fourth aspect, which may be implemented in conjunction with any one of the first to third aspects, in the wireless communication mode, the wireless communications unit (251) receives operation instruction information about the fastening operation and the control unit (21) controls the fastening unit (23) in accordance with the operation instruction information.

This aspect allows operation instruction information about a new fastening operation to be transmitted to an electric tool (2) at a distant location, thus achieving the advantage of improving the user-friendliness.

In an electric tool (2) according to a fifth aspect, which may be implemented in conjunction with the fourth aspect, the control unit (21) makes, when the fastening operation has been all done in accordance with the operation instruction information, the fastening unit (23) suspend the fastening operation.

This aspect may reduce the chances of the fastening operation being performed by the fastening unit (23) in a state where no operation instruction information about the fastening operation is entered.

In an electric tool (2) according to a sixth aspect, which may be implemented in conjunction with any one of the first to fifth aspects, the control unit (21) makes the fastening unit (23) suspend the fastening operation during a transmission period in which the wireless communications unit (251) transmits the operations data.

This aspect may reduce the chances of the wireless communications unit (251) making communication errors due to the noise involved with the fastening operation performed by the fastening unit (23).

In an electric tool (2) according to a seventh aspect, which may be implemented in conjunction with any one of the first to sixth aspects, the control unit (21) sets the communication mode to be either the wireless communication mode or the wired communication mode in accordance with mode setting information that the wired communications unit (252) has received from a terminal device (3) connected to the wired communications unit (252) via a communications cable (CB1).

This aspect allows the user to set the communication mode using the terminal device (3).

An electric tool system (1) according to an eighth aspect includes the electric tool (2) according to any one of the first to seventh aspects and a receiver (4). The receiver (4) receives the operations data that has been transmitted from the wireless communications unit (251).

According to this aspect, the communication mode of the communications unit (25) of the electric tool (2) includes at least a wireless communication mode and a wired communication mode. In the wired communication mode, the wired communications unit (252) transmits, by the wired communication method, the operations data stored in the storage unit (27) while the electric tool (2) is operating in the wired communication mode. This reduces the chances of the fastening operation being interfered by transmission of the operation data, thus achieving the advantage of improving the user-friendliness compared to transmitting the operation data by the wireless communication method during an intermission between fastening operations.

Note that these are not the only aspects of the present disclosure but various configurations (including variations) of the electric tool (2) according to the exemplary embodiment described above may also be implemented as, for example, a method for controlling the electric tool (2), a (computer) program, or a non-transitory storage medium on which the program is stored.

Note that the constituent elements according to the second to seventh aspects are not essential constituent elements for the electric tool (2) but may be omitted as appropriate.

### Reference Signs List

- 1: Electric Tool System
- 2: Electric Tool
- 3: Terminal Device
- 4: Receiver
- 21: Control Unit
- 23: Fastening Unit
- 24: Sensor Unit
- 25: Communications Unit
- 27: Storage Unit
- 200: Tool Body
- 251: Wireless Communications Unit
- 252: Wired Communications Unit

## Claims

1. An electric tool (2) comprising:
a fastening unit (23) configured to perform a fastening operation on a designated member using driving force supplied from a power source (26);
a control unit (21) configured to control operations of the fastening unit (23);
a sensor unit (24) configured to measure at least fastening torque applied by the fastening unit (23);
a communications unit (25) configured to transmit operations data about a result of measurement made by the sensor unit (24);
a storage unit (27); and
a portable tool body (200) housing the fastening unit (23), the control unit (21), the sensor unit (24), the communications unit (25), and the storage unit (27),
the communications unit (25) including: a wireless communications unit (251) configured to transmit the operations data by a wireless communication method; and a wired communications unit (252) configured to transmit the operations data by a wired communication method,
the communications unit (25) being configured to transmit the operations data in a communication mode including at least a wireless communication mode and a wired communication mode,
the wireless communications unit (25) being configured to transmit, by the wireless communication method in the wireless communication mode, at least a part of the operations data about the result of measurement provided by the sensor unit (24), when the fastening operation has been done for either one round or multiple rounds, **characterised in that**
the wired communications unit is configured to, while the communications unit is operating in the wired communication mode, transmit, by the wired communication method in the wired communication mode, the operations data stored in the storage unit (27).

2. The electric tool of claim 1, wherein
in the wireless communication mode, the wireless communications unit (25) is configured to transmit at least a part of the operations data by the wireless communication method when the fastening operation has been done for one round.

3. The electric tool of claim 1, wherein
in the wireless communication mode, the wireless communications unit (25) is configured tc transmit at least a part of the operations data by the wireless communication method when the fastening operation has been done for multiple rounds.

4. The electric tool of any one of claims 1 to 3, wherein
in the wireless communication mode, the wireless communications unit (25) is configured to receive operation instruction information about the fastening operation and the control unit (21) is configured to control the fastening unit (23)
in accordance with the operation instruction information.

5. The electric tool of claim 4, wherein
the control unit (21) is configured to, when the fastening operation has been all done in accordance with the operation instruction information, make the fastening unit (23) suspend the fastening operation.

6. The electric tool of any one of claims 1 to 5, wherein
the control unit (21) is configured to make the fastening unit (23) suspend the fastening operation during a transmission period in which the wireless communications unit (25) transmits the operations data.

7. The electric tool of any one of claims 1 to 6, wherein
the control unit (21) is configured to set the communication mode to be either the wireless communication mode or the wired communication mode in accordance with mode setting information that the wired communications unit (25) has received from a terminal device (3) connected to the wired communications unit (25) via a communications cable (CB1).

8. An electric tool system comprising:
the electric tool (2) of any one of claims 1 to 7; and
a receiver (4), the receiver (4) being configured to receive the operations data that has been transmitted from the wireless communications unit (25).

## Patentansprüche

1. Elektrowerkzeug (2) umfassend:
eine Befestigungseinheit (23), die konfiguriert ist, einen Befestigungsvorgang an einem bestimmten Glied unter Verwendung von Antriebskraft durchzuführen, die von einer Leistungsquelle (26) bereitgestellt wird;
eine Steuer- bzw. Regeleinheit (21), die konfiguriert ist, Vorgänge der Befestigungseinheit (23) zu steuern bzw. zu regeln;
eine Sensoreinheit (24), die konfiguriert ist, zumindest ein Befestigungsmoment zu messen, das von der Befestigungseinheit (23) aufgebracht wird;
eine Kommunikationseinheit (25), die konfiguriert ist, Betriebsdaten zu einem Ergebnis einer Messung, die von der Sensoreinheit (24) vorgenommen wird, zu übertragen;
eine Speichereinheit (27); und
einen tragbaren Werkzeugkörper (200), der die Befestigungseinheit (23), die Steuer- bzw. Regeleinheit (21), die Sensoreinheit (24), die Kommunikationseinheit (25) und die Speichereinheit (27) unterbringt,
wobei die Kommunikationseinheit (25) beinhaltet: eine drahtlose Kommunikationseinheit (251), die konfiguriert ist, die Betriebsdaten durch ein drahtloses Kommunikationsverfahren zu übertragen; und eine drahtgebundene Kommunikationseinheit (252), die konfiguriert ist, die Betriebsdaten durch ein drahtgebundenes Kommunikationsverfahren zu übertragen,
wobei die Kommunikationseinheit (25) konfiguriert ist, die Betriebsdaten in einem Kommunikationsmodus zu übertragen, der zumindest einen drahtlosen Kommunikationsmodus und einen drahtgebundenen Kommunikationsmodus beinhaltet,
wobei die drahtlose Kommunikationseinheit (25) konfiguriert ist, durch das drahtlose Kommunikationsverfahren in dem drahtlosen Kommunikationsmodus, zumindest einen Teil der Betriebsdaten zu dem Ergebnis der Messung, die von der Sensoreinheit (24) bereitgestellt werden, nach Abschluss des Befestigungsvorgangs ein- oder mehrmalig zu übertragen, **dadurch gekennzeichnet, dass**
die drahtgebundene Kommunikationseinheit konfiguriert ist, während die Kommunikationseinheit in dem drahtgebundenen Kommunikationsmodus arbeitet, durch das drahtgebundene Kommunikationsverfahren in dem drahtgebundenen Kommunikationsmodus die in der Speichereinheit (27) gespeicherten Betriebsdaten zu übertragen.

2. Elektrowerkzeug nach Anspruch 1, wobei
die drahtlose Kommunikationseinheit (25) in dem drahtlosen Kommunikationsmodus konfiguriert ist, zumindest einen Teil der Betriebsdaten nach Abschluss des Befestigungsvorgangs einmalig durch das drahtlose Kommunikationsverfahren zu übertragen.

3. Elektrowerkzeug nach Anspruch 1, wobei
die drahtlose Kommunikationseinheit (25) in dem drahtlosen Kommunikationsmodus konfiguriert ist, zumindest einen Teil der Betriebsdaten nach Abschluss des Befestigungsvorgangs mehrmalig durch das drahtlose Kommunikationsverfahren zu übertragen.

4. Elektrowerkzeug nach einem der Ansprüche 1 bis 3, wobei
die drahtlose Kommunikationseinheit (25) in dem drahtlosen Kommunikationsmodus konfiguriert ist, Betriebsanweisungsinformationen zu dem Befestigungsvorgang zu empfangen, und die Steuer- bzw. Regeleinheit (21) konfiguriert ist, die Befestigungseinheit (23) gemäß den Betriebsanweisungsinformationen zu steuern bzw. zu regeln.

5. Elektrowerkzeug nach Anspruch 4, wobei
die Steuer- bzw. Regeleinheit (21) konfiguriert ist, wenn der Befestigungsvorgang gemäß den Betriebsanweisungsinformationen vollständig abgeschlossen ist, die Befestigungseinheit (23) zu veranlassen, den Befestigungsvorgang auszusetzen.

6. Elektrowerkzeug nach einem der Ansprüche 1 bis 5, wobei
die Steuer- bzw. Regeleinheit (21) konfiguriert ist, die Befestigungseinheit (23) zu veranlassen, den Befestigungsvorgang während eines Übertragungszeitraums auszusetzen, in dem die drahtlose Kommunikationseinheit (25) die Betriebsdaten überträgt.

7. Elektrowerkzeug nach einem der Ansprüche 1 bis 6, wobei
die Steuer- bzw. Regeleinheit (21) konfiguriert ist, den Kommunikationsmodus entweder auf drahtlosen Kommunikationsmodus oder drahtgebundenen Kommunikationsmodus einzustellen, und zwar gemäß Moduseinstellinformationen, welche die drahtgebundene Kommunikationseinheit (25) von einer Endgerätvorrichtung (3) empfangen hat, die über ein Kommunikationskabel (CB1) mit der drahtgebundenen Kommunikationseinheit (25) verbunden ist.

8. Elektrowerkzeugsystem, umfassend:
das Elektrowerkzeug (2) nach einem der Ansprüche 1 bis 7; und
einen Empfänger (4), wobei der Empfänger (4) konfiguriert ist, die von der drahtlosen Kommunikationseinheit (25) übertragenen Betriebsdaten zu empfangen.

## Revendications

1. Outil électrique (2) comprenant :
un module de serrage (23) configuré pour réaliser une opération de serrage sur un élément désigné en utilisant une force d'entraînement fournie depuis une source de puissance (26) ;
un module de commande (21) configuré pour commander des opérations du module de serrage (23) ;
un module de capteur (24) configuré pour mesurer au moins un couple de serrage appliqué par le module de serrage (23) ;
un module de communications (25) configuré pour transmettre des données d'opérations concernant un résultat de mesure réalisé par le module de capteur (24) ;
un module de stockage (27) ; et
un corps d'outil portatif (200) hébergeant le module de serrage (23), le module de commande (21), le module de capteur (24), le module de communications (25) et le module de stockage (27),
le module de communications (25) incluant : un module de communications sans fil (251) configuré pour transmettre les données d'opérations par un procédé de communication sans fil ; et un module de communications filaire (252) configuré pour transmettre les données d'opérations par un procédé de communication filaire,
le module de communications (25) étant configuré pour transmettre les données d'opérations dans un mode de communication incluant au moins un mode de communication sans fil et un mode de communication filaire,
le module de communications sans fil (25) étant configuré pour transmettre, par le procédé de communication sans fil dans le mode de communication sans fil,
au moins une partie des données d'opérations concernant le résultat de mesure fourni par le module de capteur (24) lorsque l'opération de serrage a été réalisée pendant un tour ou de multiples tours, **caractérisé en ce que** le module de communications filaire est configuré pour transmettre, tandis que le module de communications opère dans le mode de communication filaire, par le procédé de communication filaire dans le mode de communication filaire, les données d'opérations stockées dans le module de stockage (27).

2. Outil électrique selon la revendication 1, dans lequel dans le mode de communication sans fil, le module de communications sans fil (25) est configuré pour transmettre au moins une partie des données d'opérations par le procédé de communication sans fil lorsque l'opération de serrage a été réalisée pendant un tour.

3. Outil électrique selon la revendication 1, dans lequel dans le mode de communication sans fil, le module de communications sans fil (25) est configuré pour transmettre au moins une partie des données d'opérations par le procédé de communication sans fil lorsque l'opération de serrage a été réalisée pendant de multiples tours.

4. Outil électrique selon l'une quelconque des revendications 1 à 3, dans lequel dans le mode de communication sans fil, le module de communications sans fil (25) est configuré pour recevoir des informations d'instruction d'opération concernant l'opération de serrage et le module de commande (21) est configuré pour commander le module de serrage (23) conformément aux informations d'instruction d'opération.

5. Outil électrique selon la revendication 4, dans lequel le module de commande (21) est configuré pour faire suspendre l'opération de serrage au module de serrage (23) lorsque l'opération de serrage a été entièrement réalisée conformément aux informations d'instruction d'opération.

6. Outil électrique selon l'une quelconque des revendications 1 à 5, dans lequel le module de commande (21) est configuré pour faire suspendre l'opération de serrage au module de serrage (23) au cours d'une période de transmission dans laquelle le module de communications sans fil (25) transmet les données d'opérations.

7. Outil électrique selon l'une quelconque des revendications 1 à 6, dans lequel le module de commande (21) est configuré pour régler le mode de communication pour être soit le mode de communication sans fil, soit le mode de communication filaire conformément à des informations de réglage de mode que le module de communications filaire (25) a reçues d'un dispositif de terminal (3) connecté au module de communications filaire (25) par le biais d'un câble de communications (CB1).

8. Système d'outil électrique comprenant :
l'outil électrique selon l'une quelconque des revendications 1 à 7 ; et
un récepteur (4), le récepteur (4) étant configuré pour recevoir les données d'opérations qui ont été transmises depuis le module de communications sans fil (25).
